# EUROPÄISCHE PATENTSCHRIFT

(11) **EP 3 403 008 B1**
(45) Veröffentlichungstag und Bekanntmachung des Hinweises auf die Patenterteilung: **29.01.2020**
(21) Anmeldenummer: 16826723.5
(22) Anmeldetag: 20.12.2016
(51) Int. Cl.: F16K 1/46, F16K 27/00, F16K 31/06

(54) **ELEKTROMAGNETVENTIL UND VERWENDUNG EINES SOLCHEN**
ELECTROMAGNETIC VALVE AND USE THEREOF
ÉLECTROVANNE ET UTILISATION DE CELLE-CI

(30) Priorität: 14.01.2016 DE 102016100604
(43) Veröffentlichungstag der Anmeldung: 21.11.2018
(73) Patentinhaber: ETO MAGNETIC GmbH, 78333 Stockach (DE)
(72) Erfinder: RAFF, Viktor, 78467 Konstanz (DE); THODE, Oliver, 78333 Stockach (DE)
(74) Vertreter: Patentanwälte Behrmann Wagner PartG mbB
(86) Internationale Anmeldenummer: PCT/EP2016/082010
(87) Internationale Veröffentlichungsnummer: WO 2017/121587

(56) Entgegenhaltungen:
- EP-A1- 1 643 174
- WO-A1-2013/191541
- DE-A1- 3 506 493
- FR-A1- 2 552 196
- US-A- 2 812 776
- US-A- 4 298 027

## Beschreibung

Die vorliegende Erfindung betrifft ein Elektromagnetventil nach dem Oberbegriff des Hauptanspruchs. Ferner betrifft die vorliegende Erfindung eine Verwendung eines derartigen Elektromagnetventils.

Gattungsgemäße Elektromagnetventile sind aus dem Stand der Technik allgemein bekannt; bei diesen wird üblicherweise die Ventilfunktion mittels einer in einem Ventilgehäuse relativ zu stationären Spulenmitteln bewegbar vorgesehenen Ankereinheit bewirkt, welche, typischerweise mit Dichtmitteln versehen, entsprechend einem Bestromungszustand der Spulenmittel und einer dadurch bewirkten Ankerposition einen zugeordneten Ventilsitz eines Ein- oder Auslasses des Magnetventils gesteuert öffnen oder schließen kann.

Ein für den Einsatz einer derartigen, als generisch und allgemein bekannt vorausgesetzten Technologie bevorzugter Verwendungsbereich ist die Kraftfahrzeugtechnik; hier eignen sich etwa bekannte, gattungsgemäße Elektromagnetventile für vielfältige Schalt- und Stellaufgaben im Zusammenhang mit einem Pneumatik- oder Hydraulikfluid.

So offenbart etwa die DE 196 06 318 C2 eine oberbegriffliche Technologie zum Stand der Technik, welche die als endseitig eines stößelartigen Ankerabschnitts in Form eines Dichtkörpers vorgesehenen Dichtmittel zum einen nutzt, um, angetrieben durch die Ankereinheit, gesteuert mit einem einem Ventileinlass zugeordneten Ventilsitz dichtend zusammenzuwirken. Zum anderen wird nach dieser Lehre aus dem Stand der Technik der Dichtkörper zusätzlich benutzt, um an einem axial dem Ventilsitz bzw. einem zugehörigen Dichtabschnitt gegenüberliegenden Bereich einen weiteren Fluidkanal im Rahmen des Ventils gesteuert zu öffnen bzw. zu verschließen.

US2812776 A und DE3506493 A1 offenbaren elektromagnetische Ventile nach dem Stand der Technik mit den Merkmalen der Präambel des Anspruchs 1.

Gerade eine derartige Ausgestaltung des Dichtkörpers ermöglicht es zudem vorteilhaft, sowohl den Ventileinlass, als auch mindestens einen weiteren (zweiten) Ventileinlass bzw. Ventilauslass, wiederum bezogen auf eine axiale Relativposition zur Ankereinheit, auf einer gemeinsamen axialen Seite vorzusehen. Mit anderen Worten, in für einen Einbau und Anschluss mit vor- bzw. nachgeschalteten Aggregaten lässt sich in günstiger Weise eine derartige Magnetventiltechnologie an lediglich einer Seite bzw. an einem (gemeinsamen) Bereich des Ventilgehäuses konnektieren.

Der aus dem genannten Stand der Technik bekannte Ventilkörper, endseitig einer Stößelstange am Anker festlegt, besteht aus einem polymeren Elastomermaterial, wobei die aus dem Stand der Technik bekannte Vorrichtung im Betrieb durch Bestromung der Spulenmittel und damit Aktivierung der Ankereinheit den Dichtkörper zum Schließen des Ventileinlasses betätigt; diesem wirkt dann allerdings ein Gegendruck des durch diesen Einlass einströmenden Fluids (im Stand der Technik Hydrauliköl) entgegen. An einer gegenüberliegenden Anker- bzw. Dichtposition versperrt dann der Dichtkörper einen rückwärtigen Fluid- bzw. Druckausgleichskanal.

Während eine derartige oberbegriffliche Technologie insbesondere für den vorgesehenen Einsatzzweck im Rahmen eines Druckreglers für die hydraulische Getriebesteuerung bewährt ist und in großen Stückzahlen hergestellt wird, ist gleichwohl das bekannte Ventilprinzip nicht für alle denkbaren Ausgestaltungen optimal. So realisiert etwa das bekannte Ventil, in der Art eines Proportionalventils, eine Regelfunktionalität durch die beschriebenen Kraftverhältnisse am Dichtkörper zwischen der Ankerkraft einerseits und der Fluid-Gegenkraft andererseits. Insbesondere jedoch eine Realisierung eines Ventils mit einer stromlos-geschlossenen Funktionalität, bei welcher nämlich, üblicherweise durch Wirkung einer Druckfeder od.dgl. Kraftspeichermitteln, der Dichtkörper gegen den Ventilsitz vorgespannt ist, wenn die Spulenmittel unbestromt sind, und damit keine elektromagnetische Ankerbetätigung stattfindet, ist mit der gattungsgemäßen Technologie praktisch nicht oder nur schwer zu erreichen: Zum einen sieht diese nämlich explizit eine Ankervorspannung durch Federmittel entgegen einer Verschlussrichtung vor, zum anderen würde die bekannte Ausgestaltung des Dichtkörpers als Vollpolymer im Einsatzkontext erhebliche konstruktive und Betriebsnachteile bedeuten. Um nämlich etwa bei einer Kraft entsprechend einem Fluid-Gegendruck oberhalb von 10bar zuverlässig abdichten zu können, ist nicht nur eine entsprechend hohe Federkraft einer den gewünschten stromlos geschlossenen Betriebszustand herstellenden Feder notwendig (typischerweise müsste tatsächlich eine Federkraft 18N bis 20N auf den Dichtkörper bringen), auch würde der polymere Dichtkörper in einem Dauerbetrieb bzw. bei längerer Standzeit durch diese Kraftbeaufschlagung derart beeinträchtigt bzw. beschädigt, dass eine ordnungsgemäße Dichtung am Ventilsitz nicht mehr gewährleistet ist. Insbesondere hat sich nämlich herausgestellt, dass die Elastomerdichtung einen sogenannten Durchstanzeffekt gezeigt hat, nämlich eine irreparable mechanische Deformation des Dichtkörpers im Hinblick auf seine Befestigung am endseitigen Bereich der Ankereinheit.

Eine derartige Problematik gewinnt zusätzlich dadurch an Bedeutung, dass etwa gegenüber der gattungsgemäßen Druckregelung eines Hydrauliköls für ein Hydraulikventil eine beabsichtigte Nutzung als Pneumatikventil, und insbesondere als Pneumatik-Schaltventil, mit einer sicheren Dichtung im stromlos geschlossenen Zustand, praktisch unmöglich ist.

Aufgabe der vorliegenden Erfindung ist es daher, ein Elektromagnetventil nach dem Oberbegriff des Hauptanspruchs sowohl im Hinblick auf seine Dichteigenschaften im Zusammenwirken mit dem Ventilsitz, als auch seine Eignung für eine hohe Zahl von Schaltvorgängen bzw. eine Dauerbelastung zu verbessern und damit eine nutzbare Standzeit signifikant zu erhöhen. Dabei soll gleichzeitig eine Lösung geschaffen werden, die konstruktiv einfach und mit geringen Herstellungskosten automatisiert herstellbar ist.

Die Aufgabe wird durch das Elektromagnetventil mit den Merkmalen des Hauptanspruchs gelöst; vorteilhafte Weiterbildungen der Erfindung sind in den Unteransprüchen beschrieben. Zusätzlich Schutz im Rahmen der Erfindung wird zudem beansprucht für eine Verwendung eines erfindungsgemäßen Elektromagnetventils für den Kraftfahrzeugkontext, wobei diese Verwendung den Einsatz als Pneumatikventil, weiter bevorzugt in paarweiser Form, vorsieht.

In erfindungsgemäß vorteilhafter Weise ist der Dichtkörper mehrteilig bzw. als Mehrkomponententeil ausgestaltet, dergestalt, dass ein aus polymerem oder Gummimaterial ausgebildeter Dichtabschnitt zusammengebracht ist mit einem Trägerabschnitt, welcher aus einem vom Material des Dichtabschnitts verschiedenen Material realisiert ist, welches zudem bevorzugt (und relativ zum Material des Dichtabschnitts) hart ausgestaltet ist. Dieser Trägerabschnitt wiederum ist erfindungsgemäß zum Ausbilden eines Kraftschlusses mit den Ankermitteln, zumindest im Dichtzustand an dem Ventilsitz bzw. in einer Ankerposition am Ventilsitz, ausgestaltet.

Eine vorteilhafte Wirkung dieser erfindungsgemäßen Ausgestaltung des Dichtkörpers ist, dass einerseits ein verschleißarmer und damit für eine lange Standzeit und Lebensdauer ausgebildeter Betrieb ermöglicht ist, insbesondere kann nämlich durch die separate Ausgestaltung des Trägerabschnitts, welcher den Kraftschluss mit den Ankermitteln (und insbesondere dort einem endseitigen Stößelabschnitt) realisiert, das aus dem Stand der Technik identifizierte nachteilige Durchstechen bzw. Beschädigen des polymeren Dichtmaterials vermieden werden. Gleichzeitig verbleibt dieses in seiner Dichtwirkung günstige polymere bzw. Gummimaterial für den erfindungsgemäßen Dichtabschnitt an jenen Abschnitten bzw. Bereichen des Trägerabschnitts, welche dann für die beabsichtigte Dichtwirkung notwendig sind, so dass erfindungsgemäß der aus dem Stand der Technik ersichtliche Problemkontext wirksam überwunden werden kann.

Dabei gestattet auch die mehrteilige bzw. mit mehreren Komponenten realisierte Ausführung des Dichtkörpers eine einfache, automatisierbare und damit potentiell kostengünstige Fertigbarkeit, so dass ein scheinbarer Nachteil des aufwendigeren Dichtkörpers deutlich hinter den konstruktiv-mechanischen Vorteilen zurücktritt. Damit eignet sich dann die vorliegende Erfindung, wie insbesondere auch weiterbildend vorgesehen, bevorzugt zur Realisierung einer stromlos geschlossenen Ausgestaltung des Elektromagnetventils, bei welcher Kraftspeichermittel, etwa in Form einer geeignet dimensionierten und eine geeignete Gegenkraft gegen einströmendes Fluid anbietende Druckfeder, verschleiß- und beschädigungsarm den Dichtsitz selbst bei langer Standzeit und einer hohen Anzahl von Betriebszyklen sicherstellt. Nicht zuletzt ist damit auch die Eignung für eine - bevorzugte - Realisierung des erfindungsgemäßen Elektromagnetventils als Pneumatikventil gewährleistet, mit den entsprechend vorteilhaften Wirkungen auf die Dichtwirkung am Ventilsitz selbst bei einem druckbeaufschlagten Pneumatikfluid.

In erfindungsgemäß vorteilhafter Weise und konstruktiv weiterbildend gestattet die vorliegende Erfindung das Vorsehen des mindestens einen zweiten Ventilein- bzw. -auslasses im Ventilgehäuse auf derselben axialen Seite wie der erste Ventileinlass, so dass die vorliegende Erfindung, etwa in der bevorzugten Verwendung im Kraftfahrzeugkontext, die diskutierten vorteilhaften Betriebseigenschaften mit günstigen Montageeigenschaften und einfacher Anschließbarkeit von einer (axialen) Seite kombiniert.

Dabei ist dann insbesondere, neben der bevorzugten Ausgestaltung als Pneumatikventil, die Möglichkeit eröffnet, die Erfindung als sogenanntes 3/2-(Schalt-) Ventil auszugestalten, nämlich mit zwei durch die Ankermittel erreichten Schaltstellungen und drei Ein- bzw. Auslässen, wobei der erste Ventileinlass dann erfindungsgemäß mit zwei der zweiten Ventilein- bzw. -auslässe zusammenwirkt und, je nach Schaltstellung, diese zweiten Ventilein- bzw. -auslässe unmittelbar miteinander verbindbar sind, oder aber eine Verbindung zum ersten Ventileinlass hergestellt werden kann.

Bei dieser Ausgestaltung greift dann erfindungsgemäß der Dichtkörper axial einends auf den Ventilsitz, anderenends dient er dem geschalteten Öffnen bzw. Verschließen eines fluidleitenden Übergangsabschnitts zwischen den zwei der zweiten Ventilein- bzw. -auslässe.

Erfindungsgemäß weiterbildend und vorteilhaft ist ferner vorgesehen, den Trägerabschnitt des Dichtkörpers so auszubilden, insbesondere diesem einen Anschlag zuzuordnen, der mit einem endseitig eines Stößelabschnitts der Ankermittel vorgesehenen Widerlager, insbesondere Ringabsatz, zusammenwirken kann. Auf diese Weise ist nicht nur ein wirksamer und verschleißarmer Krafteintrag in den Dichtkörper möglich, auch gestattet eine derartige Ausbildung, insbesondere wenn etwa der Trägerabschnitt mittels einer Nut oder Bohrung zur Aufnahme eines zugeordneten und angepassten Verbindungsabschnitts der Ankermittel ausgebildet ist, das einfache Montieren bzw. ggf. auch Demontieren in einem etwaigen Reparatur- oder Wartungsfall.

In für eine automatisierte Serienfertigung besonders günstiger Weise ist zudem der Trägerabschnitt des Dichtkörpers aus einem Kunststoff- oder Metallmaterial realisiert und weiter bevorzugt durch ein geeignetes Spritz(Gieß-)Verfahren hergestellt, wobei dann auf, an und/oder in einem derartigen Trägerabschnitt der polymere Dichtabschnitt durch geeignetes Ein- bzw. Umspritzen, alternativ durch Einlegen oder Einkleben, festgelegt ist. Besonders bevorzugt kann zudem der polymere Dichtabschnitt, wirkend axial beidseitig des Dichtkörpers, auch als sich (abschnittsweise) durch den Trägerabschnitt erstreckende Baugruppe, etwa durch ein geeignetes Spritzverfahren, realisiert sein, hier wiederum ergänzend oder alternativ mit geeigneten querschnittlichen Profilierungen, Absätzen od.dgl., um, in einem vorliegenden möglichen Hochdruckkontext am Ventileinlass, optimierte Krafteigenschaften, insbesondere auch im Übergang zwischen dem Trägerabschnitt und dem Dichtabschnitt des Dichtkörpers, zu realisieren.

Im Ergebnis wird durch die vorliegende Erfindung die aus dem Stand der Technik bekannte Technologie in überraschend einfacher und eleganter Weise verbessert, und zwar sowohl im Hinblick auf Standzeit-, Verschleiß- und Dichtigkeitseigenschaften, als auch betreffend eine Eignung für ein (etwa durch Federkraft vorgespanntes) stromlos geschlossenes (stromlos dichtendes) Ventil, welches zu den erhöhten Dichtigkeitsanforderungen eines Pneumatikfluids vorteilhaft genügt.

Damit eignet sich die vorliegende Erfindung gemäß der erfindungsgemäßen Verwendung in herausragender Weise für Pneumatik-Stellzwecke in einem Fahrzeugkontext, und dort insbesondere für eine Nutzfahrzeug-Getriebesteuerung. Die Erfindung ist jedoch auf diese Verwendung nicht beschränkt. Vielmehr eignet die vorliegende Erfindung für jeglichen Einsatzzweck eines Elektromagnetventils, bei welchem die vorteilhaften axial beidseitigen Dichteigenschaften des erfindungsgemäßen Dichtkörpers mit den mechanischen, Fertigungs- und Standzeiteigenschaften vorteilhaft auszunutzen sind.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine Längsschnittansicht durch eine Anordnung eines Paares von Elektromagnetventilen gemäß einem ersten Ausführungsbeispiel der Erfindung mit sich in der Figurenebene vertikal erstreckender jeweiliger axialer Richtung;
- Fig. 2:: eine Perspektivansicht des gelöst vom Elektromagnetventil dargestellten Dichtkörpers im Ausführungsbeispiel der Fig. 1;
- Fig. 3:: eine perspektivische Querschnittsansicht des Dichtkörpers gemäß Fig. 2;
- Fig. 4:: eine Perspektivansicht des Elektromagnets als Kontextdarstellung im Rahmen der vorliegenden Erfindung und
- Fig. 5, Fig. 6:: Längsschnittsdarstellungen des Elektromagnetventilpaares der Fig. 4 zum Erfindungskontext, insoweit als Möglichkeit zum Einsetzen des erfindungsgemäßen Dichtkörpers der Fig. 2, 3.

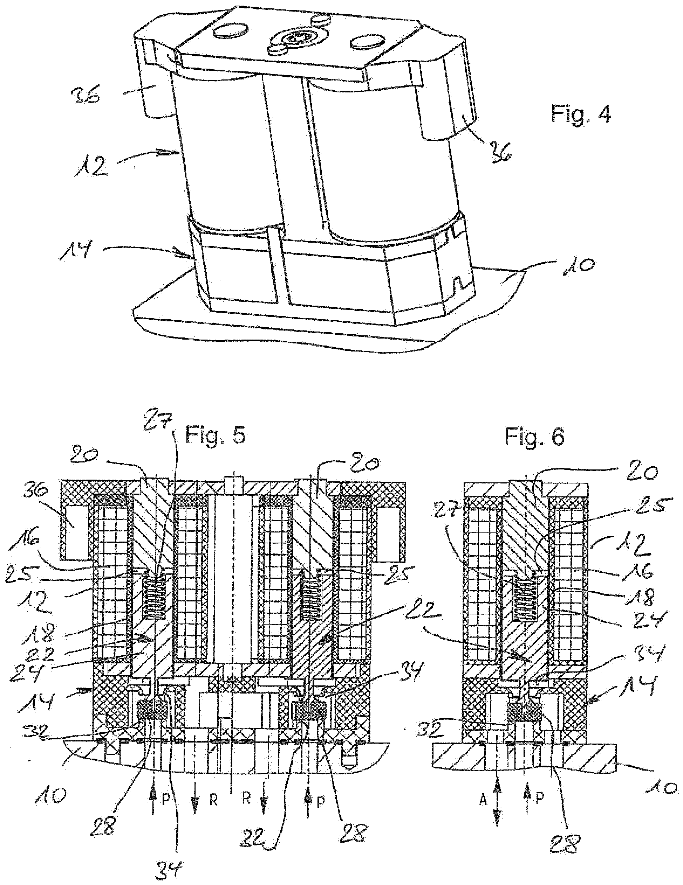

Die Fig. 4 zeigt in der Perspektivansicht einen Einsatzkontext des erfindungsgemäßen Elektromagnetventils gemäß einem ersten Ausführungsbeispiel als Paar von Elektromagnetventilen, welche einander benachbart angeordnet und auf einer unterliegenden, nicht näher spezifizierten Einheit 10 montiert sind. Die Fig. 5 und 6 zeigen Längsschnitte einer solchen Vorrichtung, wobei die Ansicht der Fig. 6 gegenüber der Schnittansicht der Fig. 5 um 90° um eine (vertikale) Achse gedreht ist, entsprechend zeigt die Fig. 6 lediglich eine Anordnung des Paares.

Jedes der Elektromagnetventile weist, in der Figurenebene obenliegend, einen Spulenbereich 12 auf, an welchen sich ein unterer Anschluss- und Ventilsitzbereich 14 anschließt. Dieser wiederum sieht, bei der Ausgestaltung der Elektromagnetventile jeweils als 3/2-Ventil, also mit drei Anschlüssen und zwei Schaltpositionen, einen Ventileinlass P und Auslässe A bzw. R vor, wobei, wie die Gegenüberstellung der Fig. 5 und 6 erkennen lässt, bei dieser Anordnung im Gehäuseabschnitt 14 die Auslässe A (auch als Arbeitsanschluss bezeichnet) und R (auch als Entlüftungsanschluss bezeichnet) um den mittig bzw. axial angeordneten Einlass P herum vorgesehen sind.

Innerhalb des oberen Gehäuseabschnitts 12 ist eine stationäre Spulenwicklung 16 auf einem Spulenträger 18 gehalten. Dieser umschließt, axial in der Figurenebene oben, einen stationären Kernabschnitt 20, gegenüber dem, axial bewegbar ausgestaltet, eine Ankereinheit 22 als Reaktion auf eine Bestromung der Spule 16 die Ventilfunktionalität bewirkt. Genauer gesagt weist die Ankereinheit 22 einen zylindrischen Ankerkörper 24 auf, welcher einends gegenüber dem stationären Kern 20 einen Luftspalt 25 ausbildet und durch Wirkung einer Druckfeder 27 in eine Abwärtsrichtung vorgespannt ist. An den zylindrischen Ankerkörper 24 schließt am dem Kern 20 gegenüberliegenden Ende ein Stößelabschnitt 26 an, an welchem wiederum endseitig ein Dichtkörper 28 befestigt ist.

In der gezeigten Konfiguration und durch Vorspannung mittels Feder 27 sitzt der Dichtkörper 28 mit einer (in der Figur abwärts gerichteten) endseitigen Stirnfläche auf einem im bodenseitigen Gehäuseabschnitt 14 ausgebildeten Ventilsitz 32, welcher dem Einlass P zugeordnet ist. Entsprechend ist bei unbestromtem Zustand dieser Einlass P verschlossen, so dass das Ventil in der gezeigten Ausführungsform eine stromlos geschlossene Konfiguration realisiert.

Die Schnittansichten der Fig. 5, 6 verdeutlichen zusätzlich, dass anderenends des Dichtkörpers 28, nämlich an einer dem Kern 20 bzw. dem Ankerkörper 24 zugewandten Seite, der Dichtkörper 28 zum Verschließen eines Durchlasses 34 ausgebildet ist, welcher eine Verbindung im Gehäuseabschnitt 14 zwischen den Ein- bzw. Auslässen A und R öffnet und verschließt. Konkret würde nämlich bei Bestromung der Spule 16, der Anker 22 in axialer Richtung und damit entlang in der Vertikalrichtung der Figurenebene aufwärts bewegt, bis, unter Schließung des Luftspaltes 25, der Ankerkörper 24 am Kern 20 anschlägt. Gleichermaßen nimmt der Stößelabschnitt 26 den ansitzenden Dichtkörper 28 aufwärts mit, bis dieser den Durchlass 34, insoweit wirkend als weiterer Ventilsitz, verschließt. In dieser - bestromten - Ventilposition ist damit der Einlass P geöffnet, eintretendes (Pneumatik-)Fluid kann entsprechend einströmen und durch den Auslass A austreten. Dagegen ist, durch die in dieser Position versperrte Durchlassöffnung 34, eine Fluidkommunikation zwischen A und R, wie sie im stromlos-geschlossenen Zustand der Fig. 5, Fig. 6 ermöglicht ist, gesperrt.

Wie die Fig. 4 und 5 verdeutlichen, sind die so konfigurierten und betreibbaren Ventile einander benachbart angeordnet, so dass, je nach elektrischer Ansteuerung über die in Fig. 4 bzw. 5 erkennbaren Steckerabschnitte 36, ein entsprechendes Bestromungssignal (die konkreten elektrischen Kontakte sind nicht gezeigt) anliegt.

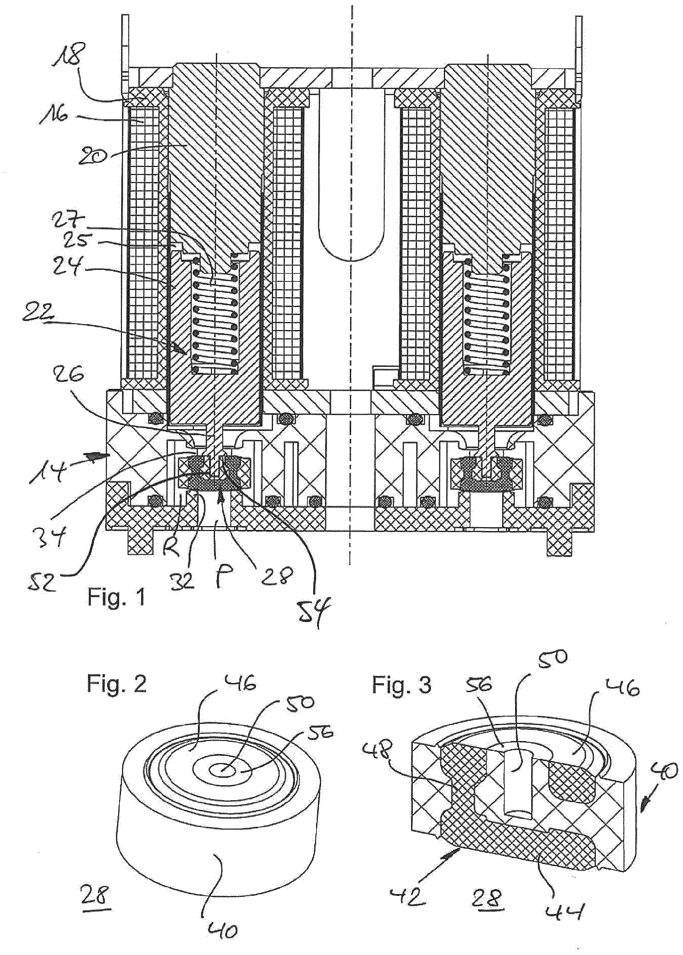

Die Fig. 2 und 3 zeigen nunmehr im Detail die vorteilhafte Ausgestaltung des Dichtkörpers 28 des vorliegenden Ausführungsbeispiels, welcher in den Fig. 5, 6 lediglich schematisch angedeutet ist. Gleichermaßen verdeutlicht, in Analogie zur Darstellung der Fig. 5, die Fig. 1 die Dichtwirkung eines gemäß Fig. 2, Fig. 3 ausgestalteten Dichtkörpers.

Es wird insbesondere aus der perspektivischen Schnittansicht der Fig. 3 deutlich, dass der Dichtkörper 28 aus mehreren Materialien bestehend ausgebildet ist. Insbesondere weist dieser einen Trägerabschnitt 40 aus einem durch ein Kunststoff-Spritzverfahren herstellbaren harten Kunststoffmaterial auf, in welchen ein Dichtabschnitt 42 aus polymerem Material eingeformt bzw. eingelegt ist. Konkret ist dieser Dichtabschnitt an eine Stirnseite, etwa im Ausführungsbeispiel gerichtet auf den Ventilsitz 32, als durchgehender Scheibenabschnitt 44 realisiert, während gegenüberliegend ein Polymerring 46 ausgebildet ist, welcher mit dem Abschnitt 44 durch in Umfangsrichtung verteilt angeordnete Stegabschnitte 48 verbunden ist. Entsprechend ist eine derartige Vorrichtung, etwa in Form eines mehrstufigen Spritzverfahrens, durch Einbringen des für den Dichtabschnitt vorgesehenen polymeren Materials in den Trägerabschnitt 40 herstellbar.

Dieser weist zudem, wie die Fig. 2, 3 gut erkennen lassen, einends eine zentrische Bohrung 50 auf, welche mit einem Endabschnitt des Anker-Stößelabschnitts 26 so zusammenwirken kann, dass ein stirnseitiger zylindrischer Stiftabschnitt 52 des Ankers in die Bohrung eingreift, während ein verbreiteter, einen Ringabsatz ausbildender Widerlagerabschnitt 54, zum Bewirken eines Kraftschlusses, auf einen Bohrungsrand 56 des (harten) Trägerkörpers 40 greift. Durch entsprechendes Ausgestalten der Maße lässt sich so eine Passung erzeugen, die, etwa bei Bewegung der Ankereinheit in Abwärtsrichtung, durch Kraftschluss den Dichtkörper 28 mitnimmt und auf den Ventilsitz 32 führt, vorgespannt zudem durch die Feder 27. Insbesondere bedingt durch den Kraftschluss vom Abschnitt 54 auf den Bohrungsrand 56 des (harten) Trägerabschnitts 40 ist zudem die aus dem Stand der Technik bekannte Gefahr einer Beschädigung eines polymeren Dichtabschnitts durch Durchstechen od.dgl. verhindert, denn an diesen Kraftschlussabschnitten ist polymeres Material nicht vorgesehen (und zum Erreichen der beschriebenen Dichtungswirkung auch nicht notwendig).

Da zudem im Rahmen des bevorzugten Ausführungsbeispiels der Einlass P druckbeaufschlagt ist - im beschriebenen bevorzugten Ausführungsbeispiel als Pneumatik-Steuersystem mit Arbeitsdrücken oberhalb von 10 bar - kommt es auf einen Kraftschluss bei einer Aufwärtsbewegung der Ankereinheit, d.h. lösend vom Ventilsitz 32, nicht an, da diese Kraftbeaufschlagung durch das in P eintretende Fluid erfolgt. Es sind jedoch Ausgestaltungen denkbar, bei welchem etwa zwischen dem zylindrischen Stößelende 52 und der Bohrung 50 eine Presspassung realisiert wird, so dass auch eine Mitnahmewirkung in beide Richtungen der Ankerbewegung erfolgen kann.

Die Schnittansicht der Fig. 1 verdeutlicht, wie das lediglich abschnittsweise im Dichtkörper 28 vorgesehene polymere Material gleichwohl zuverlässig und optimiert eine Dichtwirkung durchführt, während gleichzeitig der das polymere Material umschließende Trägerabschnitt 40 aus hartem Kunststoffmaterial für bestmögliche mechanische Eigenschaften bei geringster Verschleißneigung sorgt.

Die vorliegende Erfindung ist nicht auf das gezeigte Ausführungsbeispiel beschränkt, vielmehr ist sowohl die bevorzugte Ausgestaltung als 3/2-Ventil, als auch die Ausgestaltung des Dichtkörpers mittels eines Kunststoff-Trägerabschnitts rein exemplarisch, sowohl lassen sich die Ventilkonfigurationen, als auch die Materialwahl, als auch die jeweiligen Geometrien, eingeschlossen die möglichen Geometrien für den Dichtkörper, beliebig variieren und an jeweilige Gegebenheiten im Rahmen der nachstehenden Ansprüche anpassen.

## Patentansprüche

1. Elektromagnetventil mit
als Reaktion auf eine Bestromung stationärer Spulenmittel (16) entlang einer axialen Richtung in einem Ventilgehäuse (14) bewegbar ausgebildeten Ankermitteln (22), die axial einends zum Zusammenwirken mit einem einem ersten Ventileinlass (P) zugeordneten Ventilsitz (32) ausgebildete Dichtmittel (28) aufweisen,
wobei mindestens ein zweiter Ventilein- und/oder -auslass (A, R) im Ventilgehäuse durch Wirkung der Ankermittel zum ersten Ventileinlass (P) geöffnet werden kann,
und wobei die Dichtmittel als Dichtkörper (28) so an einem im Durchmesser verjüngten Abschnitt (26) der Ankermittel vorgesehen sind, dass der gegenüber dem verjüngten Abschnitt einen größeren Durchmesser aufweisende Dichtkörper durch die Bewegung der Ankermittel (22) zwischen axial beidends des Dichtkörpers ausgebildeten Dichtpositionen bewegt werden kann,
wobei der bezogen auf den verjüngten Abschnitt als separate Baugruppe und/oder von diesem lösbar ausgebildete Dichtkörper (28) einen aus einem polymeren und/oder Gummi-Material ausgebildeten Dichtabschnitt (42) sowie einen aus einem vom Material des Dichtabschnitts (42) verschiedenen und insbesondere härteren Material gebildeten, für einen Kraftschluss mit den Ankermitteln (22) ausgebildeten Trägerabschnitt (40) aufweist,
wobei der Dichtabschnitt (42) axial beidseitig des Dichtkörpers (28) wirkend ausgebildet ist,
**dadurch gekennzeichnet,**
**dass** der Dichtabschnitt (42) als sich durch den Trägerabschnitt (40) erstreckende Baugruppe, etwa durch ein geeignetes Spritzverfahren, realisiert ist, derartig, dass der Dichtabschnitt (42) an einer Stirnseite des Dichtkörpers (28) als durchgehender Scheibenabschnitt (44) realisiert ist, während gegenüberliegend im Dichtkörper (28) ein Polymerring (46) ausgebildet ist, der durch einen in Umfangsrichtung verteilt angeordneten Stegabschnitt (48) mit dem Scheibenabschnitt (44) verbunden ist.

2. Ventil nach Anspruch 1, **dadurch gekennzeichnet, dass** der mindestens eine zweite Ventilein- bzw. -auslass im Ventilgehäuse (14) auf derselben axialen Seite wie der erste Ventileinlass ausgebildet ist.

3. Ventil nach Anspruch 1 oder 2, **dadurch gekennzeichnet, dass** das Elektromagnetventil als Pneumatikventil und/oder als zwei Ankerpositionen der Ankermittel vorsehendes Ventil mit mindestens zwei der zweiten Ventilein- bzw. -auslässe ausgebildet ist, die an einer der Ankerpositionen fluidleitend (34) miteinander verbunden sind.

4. Ventil nach Anspruch 3, **dadurch gekennzeichnet, dass** der Dichtabschnitt (42) so am Dichtkörper ausgebildet ist, dass er in Abhängigkeit von einer Ankerposition der Ankermittel einends (44), insbesondere axial einends, den dem ersten Ventileinlass (P)) zugeordneten Ventilsitz (32) und anderenends einen zur Fluidleitung ausgebildeten Übergangsabschnitt (34) zwischen den mindestens zwei der zweiten Ventilein- bzw. -auslässe (A, R) öffnen und verschließen kann.

5. Ventil nach einem der Ansprüche 1 bis 4, **dadurch gekennzeichnet, dass** den Ankermitteln Kraftspeichermittel, insbesondere Federmittel (28), so zugeordnet sind, dass diese die Ankermittel (22) in einem unbestromten Zustand der Spulenmittel gegen den dem ersten Ventileinlass (P) zugeordneten Ventilsitz (32) vorspannen.

6. Ventil nach einem der Ansprüche 1 bis 5, **dadurch gekennzeichnet, dass** der erste Ventileinlass und/oder der zugeordnete Ventilsitz entlang der axialen Richtung vorgesehen und so mit einem Fluid beaufschlagbar ist, dass ein Fluiddruck des Fluids auf den Dichtkörper eine Kraft ausüben kann, insbesondere eine den Dichtkörper vom Ventilsitz lösende Kraft.

7. Ventil nach einem der Ansprüche 1 bis 6, **dadurch gekennzeichnet, dass** der Trägerabschnitt (40) des Dichtkörpers einen zum Zusammenwirken mit einem am bevorzugt stößelartig ausgebildeten verjüngten Abschnitt (26, 52) der Ankermittel vorgesehenen Widerlager (54), insbesondere Ringabsatz, ausgebildeten Anschlag (56) aufweist.

8. Ventil nach einem der Ansprüche 1 bis 7, **dadurch gekennzeichnet, dass** der Trägerabschnitt eine Bohrung (50) oder Nut zur Aufnahme eines Verbindungsabschnitts (52) der Ankermittel aufweist.

9. Ventil nach einem der Ansprüche 1 bis 8, **dadurch gekennzeichnet, dass** der Trägerabschnitt (40) des Dichtkörpers aus einem Kunststoff- und/oder Metallmaterial realisiert ist, mit welchem der polymere Dichtabschnitt (42) durch Ein- und/oder Umspritzen oder durch Einlegen oder Einkleben verbunden ist.

10. Verwendung des Elektromagnetventils nach einem der Ansprüche 1 bis 9, insbesondere eines Paares dieser Elektromagnetventile, als Pneumatikventil/e für das Durchführen von Fluidschaltvorgängen in Kraftfahrzeugen, insbesondere für die Nutzfahrzeug-Getriebesteuerung.

## Claims

1. An electromagnetic valve comprising
armature means (22) being configured so as to be moveable along an axial direction in a valve housing (14) in reaction to stationary coil means (16) being energized, said armature means comprising sealing means (28) configured to interact axially at one end with a valve seat (32) assigned to a first valve inlet (P),
at least one second valve inlet and/or outlet (A, R) in the valve housing being openable to the first valve inlet (P) by action of the armature means,
and the sealing means being provided as a sealing member (28) at a section (26) of the armature means that is tapered in diameter in such a manner that the sealing member, which has a larger diameter compared to the tapered section, can be moved between sealing positions realized axially at both ends of the sealing member by moving the armature means (22),
the sealing member (28), which is configured as a separate assembly in relation to the tapered section and/or configured so as to be detachable from the tapered section, having a sealing section (42) made of a polymeric and/or rubber material and a support section (40) made of a different material than the sealing section (42), in particular a harder material, and configured for a frictional connection with the armature means (22),
the sealing section (42) being configured to act axially on both sides of the sealing member (28),
**characterized in that**
the sealing section (42) is realized, for example by means of an adequate injection process, as an assembly which extends through the support section (40) in such a manner that the sealing section (42) is realized as a continuous disc section (44) at an end face of the sealing member (28), whereas a polymer ring (46) is realized on the opposite side in the sealing member (28), the polymer ring being connected to the disc section (44) by means of a web section (48) which is disposed in a distributed manner in the circumferential direction.

2. The valve according to claim 1, **characterized in that** the at least one second valve inlet or outlet is realized on the same axial side as the first valve inlet in the valve housing (14).

3. The valve according to claim 1 or 2, **characterized in that** the electromagnetic valve is realized as a pneumatic valve and/or as a valve which provides two armature positions of the armature means and which has at least two of the second valve inlets or outlets which are in fluid communication (34) with one another at one of the armature positions.

4. The valve according to claim 3, **characterized in that** the sealing section (42) is configured in such a manner at the sealing member that, depending on an armature position of the armature means, it can open or close the valve seat (32) which is assigned to the first valve inlet (P) at one end (44), in particular axially at one end, and a transition section (34) between the at least two of the second valve inlets or outlets (A, R) at the other end, the transition section (34) being configured to conduct fluid.

5. The valve according to any one of claims 1 to 4, **characterized in that** the armature means are assigned energy storage means, in particular spring means (28), in such a manner that, in a non-energized state of the coil means, said means preload the armature means (22) against the valve seat (32) which is assigned to the first valve inlet (P).

6. The valve according to any one of claims 1 to 5, **characterized in that** the first valve inlet and/or the assigned valve seat is provided along the axial direction and a fluid can be applied thereto in such a manner that a fluid pressure of the fluid can apply a force to the sealing member, in particular a force which detaches the sealing member from the valve seat.

7. The valve according to any one of claims 1 to 6, **characterized in that** the support section (40) of the sealing member has a stop (56) which is configured to interact with an abutment (54), in particular an annular section, which is provided at the preferably plunger-like, tapered section (26, 52) of the armature means.

8. The valve according to any one of claims 1 to 7, **characterized in that** the support section has a bore (50) or groove for receiving a connecting section (52) of the armature means.

9. The valve according to any one of claims 1 to 8, **characterized in that** the support section (40) of the sealing member is made of a plastic and/or metal material, to which the polymeric sealing section (42) is connected by injection and/or encapsulation or by insertion or gluing.

10. A use of the electromagnetic valve according to any one of claims 1 to 9, in particular of a pair of said electromagnetic valves, as pneumatic valve/s for performing fluid switching operations in motor vehicles, in particular for the transmission controller in commercial vehicles.

## Revendications

1. Soupape électromagnétique comprenant
des moyens d'induit (22) pouvant être déplacés le long d'une direction axiale dans un boîtier de soupape (14) en réponse à une alimentation électrique des moyens de bobine (16) stationnaires, les moyens d'induit ayant des moyens d'étanchéité (28) à une extrémité axiale qui sont réalisés pour interagir avec un siège de soupape (32) assigné à une première entrée de soupape (P),
au moins une deuxième entrée et/ou sortie de soupape (A, R) dans le boîtier de soupape pouvant être ouverte vers la première entrée de soupape (P) par l'action des moyens d'induit,
les moyens d'étanchéité étant prévus comme corps d'étanchéité (28) sur une partie (26) des moyens d'induit qui a un diamètre rétréci de telle manière que le corps d'étanchéité, qui a un plus grand diamètre par rapport à la partie rétrécie, peut être déplacé entre des positions d'étanchéité réalisées axialement aux deux extrémités du corps d'étanchéité par le mouvement des moyens d'induit (22),
le corps d'étanchéité (28), qui est réalisé comme module séparé par rapport à la partie rétrécie et/ou réalisé de manière détachable de ladite partie, ayant une partie d'étanchéité (42) réalisée en matière polymère et/ou en matériau en caoutchouc et une partie de support (40) réalisée en une matière différente de la matière de la partie d'étanchéité (42), notamment en matière plus dure, pour un liaison par force avec les moyens d'induit (22),
la partie d'étanchéité (42) étant réalisée pour agir des deux côtés axiaux du corps d'étanchéité (28),
**caractérisé en ce que**
la partie d'étanchéité (42) est réalisée, par exemple par un procédé d'injection approprié, comme module qui s'étend à travers la partie de support (40) de telle manière que la partie d'étanchéité (42) est réalisée comme partie de disque (44) continue sur un côté frontal du corps d'étanchéité (28), tandis qu'un anneau polymère (46) est réalisé sur le côté opposé dans le corps d'étanchéité (28), l'anneau polymère étant relié à la partie de disque (44) par une partie d'âme qui est disposée de manière répartie dans la direction circonférentielle.

2. Soupape selon la revendication 1, **caractérisée en ce qu'**au moins l'une deuxième entrée ou sortie de soupape est réalisée du même côté axial que la première entrée de soupape dans le boîtier de soupape (14).

3. Soupape selon la revendication 1 ou la revendication 2, **caractérisée en ce que** la soupape électromagnétique est réalisée comme soupape pneumatique et/ou comme soupape prévoyant deux positions d'induit des moyens d'induit et ayant au moins deux des deuxièmes entrées ou sorties de soupape qui sont en communication fluidique (34) l'une à l'autre dans une des positions d'induit.

4. Soupape selon la revendication 3, **caractérisée en ce que** la partie d'étanchéité (42) est réalisée de telle manière sur le corps d'étanchéité que, en fonction d'une position d'induit des moyens d'induit, ladite partie d'étanchéité peut ouvrir et fermer le siège de soupape (32) qui est assigné à la première entrée de soupape (P) à une extrémité (44), notamment à une extrémité axiale, et une partie de transition (34) entre les au moins deux des deuxièmes entrées ou sorties de soupape (A, R) à l'autre extrémité, la partie de transition (34) étant destinée à conduire du fluide.

5. Soupape selon l'une quelconque des revendications 1 à 4, **caractérisée en ce que** des moyens d'accumulation de force, notamment des moyens de ressort (28), sont assignés aux moyens d'induit de telle manière que, dans un état non-alimenté des moyens de bobine, lesdits moyens sollicitent les moyens d'induit (22) contre le siège de soupape (32) qui est assigné à la première entrée de soupape (P).

6. Soupape selon l'une quelconque des revendications 1 à 5, **caractérisée en ce que** la première entrée de soupape et/ou le siège de soupape correspondant est prévu(e) le long de la direction axiale et qu'un fluide peut être appliqué à ladite entrée de soupape et/ou au siège de soupape de telle manière qu'une pression du fluide peut appliquer une force au corps d'étanchéité, notamment une force qui détache le corps d'étanchéité du siège de soupape.

7. Soupape selon l'une quelconque des revendications 1 à 6, **caractérisée en ce que** la partie de support (40) du corps d'étanchéité a une butée (56) qui est destinée à interagir avec une culée (54), notamment un épaulement annulaire, qui est prévue à la partie rétrécie (26, 52) des moyens d'induit qui est réalisée, de préférence, en forme de poussoir.

8. Soupape selon l'une quelconque des revendications 1 à 7, **caractérisée en ce que** la partie de support (40) a un perçage (50) ou une rainure destiné(e) à recevoir une partie de liaison (52) des moyens d'induit.

9. Soupape selon l'une quelconque des revendications 1 à 8, **caractérisée en ce que** la partie de support (40) du corps d'étanchéité est réalisée en matière plastique et/ou en matière métallique, à laquelle la partie d'étanchéité (42) polymère est reliée par injection et/ou surmoulage ou par insertion ou collage.

10. Usage d'une soupape électromagnétique selon l'une quelconque des revendications 1 à 9, notamment d'une paire de ces soupapes électromagnétiques, comme soupape(s) pneumatique(s) destinée(s) à réaliser des processus de commutation fluidique dans des véhicules, notamment pour la commande de transmission dans des véhicules utilitaires.
